# EUROPEAN PATENT APPLICATION

(11) **EP 2 408 174 A1**
(43) Date of publication of application: **18.01.2012**
(21) Application number: 11005747.8
(22) Date of filing: 14.07.2011
(51) Int. Cl.: H04L 29/08

(54) **Messaging activity feed**

(30) Priority: 14.07.2010 EP 10007283; 14.07.2010 US 364217 P
(71) Applicant: Deutsche Telekom AG, 53113 Bonn (DE)
(72) Inventor: Schmitz, Markus, 53859 Niederkassel (DE)
(74) Representative: Schwöbel, Thilo K.

(57) **Abstract**

Method for providing mobile originated and/or mobile terminated user data to a public IP network, wherein the user data is transmitted between a first party and a second party over a mobile radio network, wherein the mobile radio network comprises a mobile radio network instance, wherein the mobile radio network instance is connected to a user data collector, wherein the user data collector comprises a network interface to receive and to transfer data over the public IP network, wherein a first step comprises that the user data is transmitted from the first party to the mobile radio network instance, wherein a second step comprises that a copy of the user data is generated by the mobile radio network instance and that the user data is transmitted from the mobile radio network instance to the second party, wherein a third step comprises that the copied user data is transferred from the mobile radio network instance to the user data collector, wherein a fourth step comprises that a data entry is stored in the user data collector, wherein the content of the data entry is related to the copied user data.

## Description

### BACKGROUND

The present invention relates to a method, a system, a program and a computer program product for providing mobile originated and/or mobile terminated user data to a public IP network.

With the widespread availability of Internet connectivity, it has become possible to easily share a wide variety of information like, e. g., messages, photos, audio files and videos, with a large number of people. Increasingly, such information is made publicly available by a user on the Internet like, e. g., on web portals, within online social networks and newsgroups, and can be accessed, discussed and annotated by a defined group of Internet users or even by any Internet user. This development is further pushed by the increasing number of devices having Internet access like, e. g., mobile phones, PDAs, laptop computers, televisions, multimedia players, etc., which assures that users can access and share information at almost any place and time. Despite this development, access to information exchanged by communication over the mobile radio network using, e. g., text messages or multimedia messages, is still strictly restricted to parties directly participating in the communication so that the information cannot be shared with third parties outside the mobile radio network.

In this context, the patent application DE 10 2007 023 843 A1 discloses a method to transfer information like, e. g., messages, photos, audio files and videos, from a mobile device to a web portal by establishing a direct communication between the mobile device and an access server linked to the web portal, wherein the transferred information can then be accessed via the web portal by a defined group of Internet users. The drawback of this method is that only data directly transferred from the mobile device to the web portal is made publicly available which makes the provisioning of data rather inconvenient and cost-intensive. Furthermore, information transmitted exclusively between two parties over the mobile radio network still remains inaccessible to third parties outside the mobile radio network. A method that enables to substantially link all information transmitted between parties over the mobile radio network to a publicly available network outside the mobile radio network is not known in the prior art so far.

### SUMMARY

An object of the present invention is to provide a method, a system, a program and a computer program product to make information transmitted over a mobile radio network publicly available such that the above mentioned drawbacks of the prior art are avoided.

The object of the present invention is solved by a method for providing mobile originated and/or mobile terminated user data to a public IP network, wherein the user data is transmitted between a first party and a second party over a mobile radio network, wherein the mobile radio network comprises a mobile radio network instance, wherein the mobile radio network instance is connected to a user data collector, wherein the user data collector comprises a network interface to receive and to transfer data over the public IP network, wherein a first step comprises that the user data is transmitted from the first party to the mobile radio network instance, wherein a second step comprises that a copy of the user data is generated by the mobile radio network instance and that the user data is transmitted from the mobile radio network instance to the second party, wherein a third step comprises that the copied user data is transferred from the mobile radio network instance to the user data collector, wherein a fourth step comprises that a data entry is stored in the user data collector, wherein the content of the data entry is related to the copied user data.

The object of the present invention is furthermore solved by a method for providing mobile originated and/or mobile terminated user data to a public IP network, wherein the user data is transmitted between a first party and a second party over a mobile radio network, wherein the mobile radio network comprises a mobile radio network instance, wherein the mobile radio network instance is connected to a user data collector, wherein the user data collector comprises a network interface to receive and to transfer data over the public IP network, wherein a first step comprises that the user data is transmitted from the first party to the mobile radio network instance, wherein a second step comprises that a copy of the user data is generated by the mobile radio network instance and that the user data is transmitted from the mobile radio network instance to the second party, wherein a third step comprises that the copied user data is transferred from the mobile radio network instance to the user data collector, wherein a fourth step comprises that a data entry is stored in the user data collector, wherein the content of the data entry is related to the copied user data, wherein in an initialization step at least one of the first party and the second party initializes the use of the user data collector such that, for user data to be transmitted after the completion of the initialization step, the copy of the user data is generated and transmitted from the mobile radio network instance to the user data collector.

According to the present invention, the mobile radio network comprises mobile stations, e. g., mobile phones and/or smart phones, and a radio access network, e. g., a GRAN (GSM radio access network) and/or an UTRAN (UMTS radio access network), and a core network, e. g., a GSM core network and/or a GPRS core network.

Furthermore, in the context of the present invention, "mobile originated" means that the user data is transmitted from the first party to the mobile radio network instance over the mobile radio network and then transmitted from the mobile radio network instance to the second party using any communication channel, whereas "mobile terminated" means that the user data is transmitted from the first party to the mobile radio network instance using any communication channel and then transmitted from the mobile radio network instance to the second party over the mobile radio network.

According to the present invention, a communication channel comprises the transmission of the user data via a mobile radio network and/or via a PSTN (Public Switched Telephone Network) and/or via an IP (Internet Protocol) network and/or via a cable network and/or via a satellite network. According to the present invention, it is preferred that the transmission of the user data comprises a SMS and/or a voice mail and/or a MMS and/or an e-mail and/or a fax.

Furthermore, in the context of the present invention, transmission of user data over the mobile radio network comprises a radio-based transmission of the user data between a mobile station and a base station of the mobile radio network.

Furthermore, in the context of the present invention, a public IP network is an IP network which is not exclusively comprised by the mobile radio network. According to the present invention, it is preferred that the public IP network is the Internet.

Moreover, according to the present invention, it is preferred that the user data comprises a text message and/or a voice message and/or a multimedia message and/or a digital image and/or an audio file and/or a video file.

The message content can be enriched with Meta information to allow the reconstruction of the messaging context. Meta information shall be but is not limited to: service-id:
To enable applications and business logic to define an abstract service layer across several messages events and type.
session-id:
   To enable messaging applications to define an abstract session layer across several messages events and type.
   channel-id:
To identify the original messaging context and to add technical information for message routing and charging (SMS, MMS, email).

According to the present invention, it is, thereby, advantageously possible that a large variety of information like, e. g., messages, photos, audio files and videos, transmitted between the first party and the second party over the mobile radio network is stored as a data entry in the user data collector, wherein the data entry can be accessed by a third party over the public IP network connected to the user data collector. For example, it is advantageously possible that access to the data entries stored in the user data collector is provided via a web server comprising a certain URL (Unified Resource Locator). According to the present invention, a party is any device capable of transmitting and/or receiving data like, e. g., a personal computer, a web server, a multimedia device, an automated communication machine, a handheld device, a personal digital assistant (PDA), a mobile phone, a notebook device, a game console and/or a telephone of any kind.

According to the present invention, it is advantageously possible that a user of the mobile radio network (i.e. the first or second party) is able to initiate the use of the user data collector (by means of an initialization step) such that, for user data to be transmitted after the completion of the initialization step, the copy of the user data is generated and transmitted from the mobile radio network instance to the user data collector. This allows the user (i.e. the user of the first party and/or the user of the second party) to access the copy of the user data by means of using a third party (i.e. a third device). According to the present invention, the initialization step is an active initialization by the user of the mobile radio network. This means that the user (of the first and/or second party) provides the permission to use the user data collector for at least part of the messages sent and/or received using the mobile radio network.

According to a preferred embodiment of the present invention, the initialization step can comprise an indication such that for a first part of user data (e.g. messages directed to a specific party or device (or group of parties or devices) or messages received from a specific party or device (or group of parties or devices)), the use of the user data collector shall occur and for a second part of user data (e.g. messages directed to a further specific party or device (or group of parties or devices) or messages received from a further specific party or device (or group of parties or devices)), the use of the user data collector shall not occur. According to the present invention, it is advantageously possible that a user uses the user data collector in a controlled manner such that only such messages are provided to the user data collector that the user intends to tread accordingly. The differentiation between the first part of user data (i.e. messages that are to be copied and forwarded to the user data collector) and the second part of user data (i.e. messages that are not to be copied and forwarded to the user data collector) can be provided by one or a plurality of the following criteria:
-- the party or device (or group of parties or devices) originating the user data,
-- the party or device (or group of parties or devices) receiving the user data,
-- the subject of the user data.
-- tagged message with content tags

According to the present invention, it is preferred that the user data collector comprises a processing means to convert the transferred copy of the user data such that the data entry stored in the user data collector features a unified and standardized format like, e. g., a XML (Extensible Markup Language) format.

According to the present invention, it is, thereby, advantageously possible to assure that a large variety of information transmitted between the first party and the second party over the mobile radio network can be conveniently shared with third parties.

According to the present invention, it is, furthermore, preferred that the transfer of the copied user data comprises the transfer of identification information of the first party and/or identification information of the second party to the user data collector.

According to the present invention, the identification information can be any information that identifies a party like, e. g., a MSISDN (Mobile Subscriber Integrated Service Digital Network), an IMSI (International Mobile Subscriber Identity), a fax number, an e-mail address or an IP address. According to the present invention, it is, thereby, advantageously possible to assign identification information to each data entry stored in the user data collector, e. g., using an appropriate data base, so that, preferably, said identification information is also made publicly available to third parties. For example, it is possible that a third party accessing a certain data entry stored in the user data collector receives information about the addresser or recipient of the original user data related to the data entry. One skilled in the art understands that the transfer of the copied user data can comprise further information exceeding identification information like, e. g., a time stamp or details about the communication channel used for the transmission of the user data between the first and the second party.

According to the present invention, it is, furthermore, preferred that the handling of the copied user data and/or of the stored data entry by the user data collector depends on the identification information of the first party and/or the identification information of the second party. For example, the user data collector can be configured such that copied user data corresponding to certain identification information is not stored permanently in the user data collector or not made publicly available or only made available to a predefined group of third parties, e. g., for reasons of data protection. For example, it is possible that the first party and/or the second party has to agree to a certain privacy policy before being registered in the user data collector and before user data related to said parties is being stored in the user data collector or is being made available to third parties. Such privacy policies, or data privacy contracts, (with third parties, e.g. a user or consuming service) can preferably be agreed upon in a bi-lateral manner or a multi-lateral manner and are either negotiated ad-hoc in real time or established on predefined data privacy contract templates. Furthermore, it is also possible and preferred according to the present invention that within this process of establishing a privacy contract (i.e. the privacy contract negotiation), the allowed use (especially in case of a public use) of the content or a part of the content of the user data is defined as by means of a specific license, e.g. a creative commons license. For example, it is thereby possible to define a specific public use of the content or a part of the content of the user data, e.g. to allow to reproduce a content or to allow to supplement a content, but not to change the original content or to change the content in such a way that the original content cannot be identified.

According to the present invention, it is, furthermore, preferred that a fifth step comprises that a third party transmits a data request to the user data collector over the public IP network, wherein a data entry stored in the user data collector is transmitted by the user data collector to the third party over the public IP network due to the data request.

According to the present invention, it is, thereby, advantageously possible that data is only transferred from the user data collector to the third party, if the third party explicitly requests the transfer of data. Thereby, it is advantageously possible to keep the data volume being transferred between the user data collector and the third party low. The data request can, e. g., be transmitted from a web browser of a personal computer connected to the public IP network using an appropriate standardized transfer protocol like, e. g., HTTP (Hypertext Transfer Protocol).

According to the present invention, it is, furthermore, preferred that the data request comprises authentication information and/or control information, wherein the transmission of the data entry from the user data collector to the third party over the IP network depends on the authentication information and/or control information.

According to the present invention, the authentication information can be any alphanumerical value like, e. g., a customer ID and/or a phone number and/or a user name and/or an IP address. According to the present invention, it is, thereby, advantageously possible that the third party is authenticated by the user data collector before access to the data entry is granted. For example, it is, thereby, possible that the user data collector is configured according to a predefined set of permission rules such that access to a certain data entry is restricted to a predefined group of third parties so that data protection can be advantageously assured.

According to the present invention, the control information comprise control parameters that when received by the user data collector trigger the user data collector to perform predefined actions on the stored data entries, e. g., to transmit a specific data entry and/or a specific set of data entries stored in the user data collector to a specific third party and/or to a specific group of third parties. According to the present invention, it is, thereby, advantageously possible that the transmission of data entries stored in the user data collector can be controlled in a very flexible and convenient way.

According to the present invention, it is, furthermore, preferred that, alternatively, the fifth step comprises that the data entry is transmitted by the user data collector to a third party, wherein the transmission of the data entry is initiated by the user data collector.

According to the present invention, it is, thereby, advantageously possible that a data entry is substantially automatically transmitted to a third party as soon as the data entry is stored in the user data collector. According to the present invention, it is, furthermore, preferred that the user data collector is configured such that the data entry is only transmitted by the user data collector if the data entry is related to certain identification information, e. g., a certain phone number, or if the data entry comprises a certain data content, e. g., a certain text content. A preferred application of the present invention is that a data entry stored in the user data collector related to certain identification information and/or certain data content is automatically transferred by the user data collector to a publicly available web portal comprising an Internet forum, e. g., an online social network, wherein the transferred data entries are processed by a weblog software to generate and publish content related to the data entry within the Internet forum so that the published content can be accessed, discussed and annotated by any user having access to the web portal. Preferably, the web portal, furthermore, comprises functionality to answer to a published content using appropriate web applications for sending a message via a SMS, a MMS or an e-mail, wherein preferably the addressing of the message is based on identification information, e. g., a phone number, assigned to the published content by the weblog software.

According to the present invention, it is, furthermore, preferred, that a sixth step comprises that a third party transmits a modification request to the user data collector, wherein a data entry stored in the user data collector is modified according to the modification request.

According to the present invention, it is, thereby, advantageously possible that a third party modifies a data entry stored in the user data base such that, e. g., the content of the data entry is changed or the data entry is deleted. Preferably, the modification request comprises authentication information so that based on a predefined set of permission rules the user data collector can decide whether the third party is allowed to modify the data entry. The modification request can, e. g., be transmitted from a web browser of a personal computer connected to the public IP network using an appropriate standardized transfer protocol like, e. g., HTTP (Hypertext Transfer Protocol).

The present invention further relates to a system for providing mobile originated and/or mobile terminated user data to a public IP network, wherein the system comprises a first party and a second party, wherein the user data is transmitted between the first party and the second party over the mobile radio network, wherein the system comprises a mobile radio network instance of the mobile radio network, wherein the mobile radio network instance is connected to a user data collector, wherein the user data collector comprises a network interface to receive and to transfer data over the public IP network, wherein the mobile radio network instance comprises functionality to receive the user data from the first party and to transmit the user data to the second party, wherein the mobile radio network instance comprises functionality to transfer a copy of the user data to the user data collector, wherein the user data collector comprises functionality to store a data entry related to the copied user data.

According to the present invention, it is, thereby, advantageously possible to make user data transmitted between the first party and the second party over the mobile radio network available to a public IP network and, thus, to share a large variety of information transmitted over the mobile radio network with a certain group of users of the public IP network.

Preferably, the system is configured such that by means of an initialization step, at least one of the first party and the second party initializes the use of the user data collector such that, for user data to be transmitted after the completion of the initialization step, the copy of the user data is generated and transmitted from the mobile radio network instance to the user data collector.

The present invention, furthermore, relates to a mobile radio network instance of a mobile radio network for providing mobile originated and/or mobile terminated user data to a public IP network, wherein the user data is transmitted between a first party and a second party over the mobile radio network, wherein the mobile radio network instance comprises functionality to receive the user data from the first party and to transmit the user data to the second party, wherein the mobile radio network instance comprises functionality to transfer a copy of the user data to a user data collector, wherein the user data collector comprises a network interface to receive and to transfer data over the public IP network.

Preferably, the mobile radio network instance is configured such that by means of an initialization step, at least one of the first party and the second party initializes the use of the user data collector such that, for user data to be transmitted after the completion of the initialization step, the copy of the user data is generated and transmitted from the mobile radio network instance to the user data collector.

The present invention, furthermore, relates to a user data collector for providing mobile originated and/or mobile terminated user data to a public IP network, wherein the user data is transmitted between a first party and a second party over a mobile radio network, wherein the mobile radio network comprises a mobile radio network instance, wherein the mobile radio network instance is connected to a user data collector, wherein the user data collector comprises reception means to receive a copy of the user data from the mobile radio network instance, wherein the user data collector comprises a storage to store a data entry related to the copied user data in the user data collector, wherein the user data collector comprises a network interface to receive and to transfer data over the public IP network. According to the present invention, the user data collector can be provided as a separate entity of the mobile radio network or can be provided as a functional unit of the mobile radio network instance.

According to the present invention, it is, thereby, advantageously possible to assure that user data transmitted between a first party and a second party over a mobile radio network can be made publicly available to third parties of the public IP network so that a large variety of information transmitted over the mobile radio network can be shared with users of the public IP network.

Preferably, the user data collector is configured such that by means of an initialization step, at least one of the first party and the second party initializes the use of the user data collector such that, for user data to be transmitted after the completion of the initialization step, the copy of the user data is generated and transmitted from the mobile radio network instance to the user data collector.

The present invention, furthermore, relates to a program comprising a computer readable program code that when executed on a processing means performs a method according to the present invention for providing mobile originated and/or mobile terminated user data to a public IP network.

The present invention, furthermore, relates to a computer program product comprising a computer readable program code that when executed on a processing means performs a method according to the present invention for providing mobile originated and/or mobile terminated user data to a public IP network.

These and other characteristics, features and advantages of the present invention will become apparent from the following detailed description, taken in conjunction with the accompanying drawings, which illustrate, by way of example, the principles of the invention. The description is given for sake of example only, without limiting the scope of the invention. The reference figures quoted below refer to the attached drawings.

### BRIEF DESCRIPTION OF THE DRAWINGS

Figure 1 shows schematically a first embodiment of the method according to the present invention for providing mobile originated and mobile terminated user data to a public IP network.

Figure 2 shows schematically a second embodiment of the method according to the present invention for providing mobile terminated user data to a public IP network.

Figure 3 shows schematically the processing of copied user data by the user data collector according to the present invention.

Figure 4 shows schematically a communication between the user data collector and a third party according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

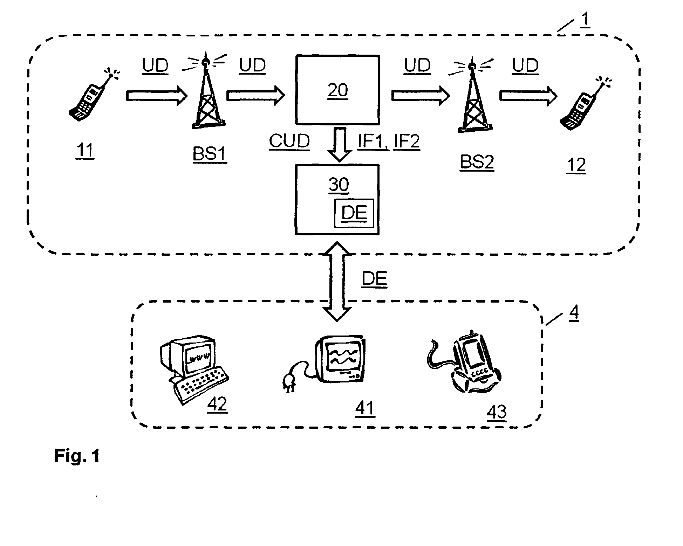

Figure 1 shows schematically a first embodiment of the method according to the present invention for providing mobile originated and mobile terminated user data to a public IP network 4, wherein the user data UD, e. g., a text message, is transmitted from a first party 11 to a second party 12 over a mobile radio network 1, e. g., via a SMS, wherein in the illustrated embodiment the first party 11 and the second party 12 correspond to mobile phones. However, one skilled in the art understands that the first and the second party 11, 12 can also correspond to any other devices capable to communicate with each other over the mobile radio network 1 like, e. g., PDAs, laptop computers, etc..The mobile radio network 1 comprises the first and the second party 11, 12, a first and a second base station BS1, BS2, a mobile radio network instance 20, e. g., a SMSC (Short Message Service Center), and a user data collector 30. According to the illustrated embodiment, the first party 11 transmits the user data UD to the first base station BS1 via a radio-based transmission, wherein the user data UD is forwarded by the BS1 to the mobile radio network instance 20. The mobile radio network instance 20 generates a copy of the user data CUD, wherein the original user data UD is routed to the second base station BS2 by the mobile radio network instance 20 and transmitted by the second base station BS2 to the second party 12 via a radio-based transmission, wherein the copied user data CUD is transferred to the user data collector 30. Preferably, the transfer of the copied user data CUD comprises the transfer of identification information IF1, IF2 of the first and/or second party 11, 12. For example, the identification information IF1, IF2 comprises the phone number and/or the IMSI of the first and/or the second party 11, 12. The copied user data CUD is being processed by the user data collector 30 and stored as a data entry DE in the user data collector 30. The user data collector 30 comprises a network interface to transfer the data entry DE over the public IP network 4 to a third party 41 of the public IP network 4, wherein according to the present invention the third party 41 can be any device capable to receive and/or to transfer data over the public IP network 4 like, e. g., a personal computer 42, a television 41 or a PDA 43. The user data collector 30 is configured such that the third party 41 and/or the group of third parties 41, 42, 43 can access the data entry DE stored in the user data collector 30. According to the present invention, it is, e.g., possible that the third party 41 comprises an appropriate web browser to download the data entry DE from the user data collector 30. Thereby, it is advantageously possible that the data entry DE which is related to the user data UD transmitted between the first party 11 and the second party 12 over the mobile radio network 1 is shared with third parties 41, 42, 43 of the public IP network 4.

One preferred application of the depicted first embodiment of the present invention is that the user data collector 30 comprises a newsfeed server to provide information based on the data entry DE stored in the user data collector 30, wherein the third party 41 can access the information provided by the newsfeed server over the public IP network 4 using an appropriate newsfeed reader. Nowadays, a large variety of devices like, e. g., mobile phones, PDAs, laptop computers, personal computers, televisions and multimedia players, comprise interfaces to communicate with a public IP network 4 and comprise newsfeed reader to download information from newsfeed servers. According to the present invention, it is, thereby, advantageously possible to conveniently access information transmitted between the first party 11 and second party 12 over the mobile radio network 1 using a large variety of devices 41, 42, 43 connected to the public IP network 4. For example, according to the present invention it is possible that a user uses a newsfeed reader on a personal computer 42 or on a television 41 connected to the public IP network 4 to monitor messages, e. g., sent to a mobile phone 12 of said user over the mobile radio network 1.

According to the first embodiment of the present invention, it is advantageously possible that a user of the mobile radio network (i.e. the first or second party 11, 12) is able to initiate the use of the user data collector 30 by means of an initialization step such that, for user data to be transmitted after the completion of the initialization step, the copy of the user data is generated and transmitted from the mobile radio network instance to the user data collector. This allows the user (i.e. the user of the first party 11 and/or the user of the second party 12) to access the copy of the user data by means of using the third party 41 (i.e. a third device). According to the present invention, the initialization step is an active initialization by the user of the mobile radio network. This means that the user (of the first and/or second party) provides the permission to use the user data collector for at least part of the messages sent and/or received using the mobile radio network.

Preferably, the initialization step comprises an indication such that for a first part of user data, the use of the user data collector shall occur, and for a second part of user data, the use of the user data collector shall not occur. According to the present invention, it is advantageously possible that a user uses the user data collector in a controlled manner such that only such messages are provided to the user data collector that the user intends to tread accordingly.

The initialization step can preferably be associated to all other embodiments of the present invention.

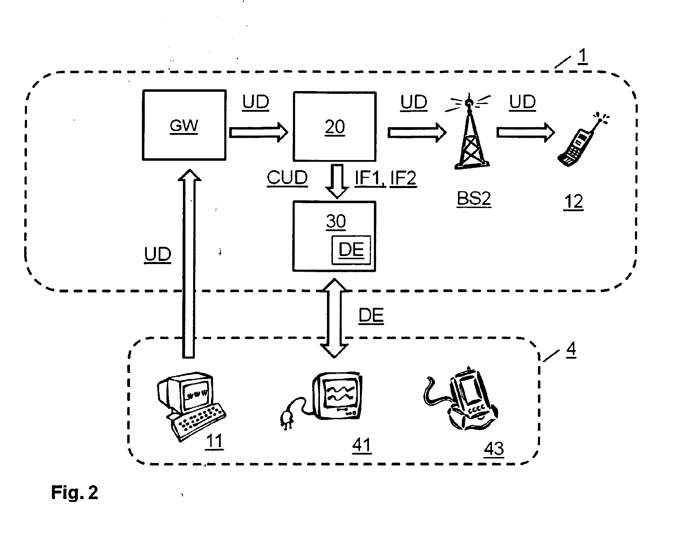

Figure 2 shows schematically a second embodiment of the method according to the present invention for providing mobile terminated user data UD to a public IP network 4, wherein the second embodiment is similar to the first embodiment depicted in Figure 1, wherein the second embodiment comprises that the user data UD is transmitted from a first party 11 of the public IP network 4 to the second party 12 of the mobile radio network 1. For example, the first party 11 corresponds to a personal computer comprising a web application to send a text message (as the user data UD) via a SMS from a web server to the second party 12. In this case, the text message UD is transferred over the public IP network 4 from the web server to a media gateway GW of the mobile radio network 1 and is routed by the media gateway GW to the mobile radio network instance 20. Similar to the first embodiment illustrated in Figure 1, the text message UD is then forwarded to the second party 12 over the mobile radio network 1, wherein a copy of the text message CUD is transferred to the user data collector 30 and stored in the user data collector 30 as a data entry DE. The data entry DE can then be accessed by third parties 41, 43 of the public IP network 4.

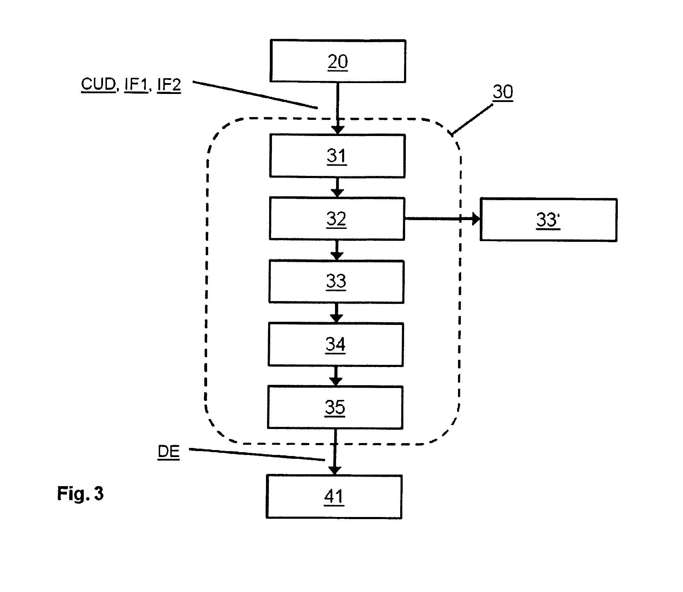

Figure 3 shows schematically the processing of copied user data CUD by the user data collector 30 according to the method of the present invention, wherein the copied user data CUD is transferred from the mobile radio network instance 20 to the user data collector 30, wherein the transfer of the copied user data CUD comprises the transfer of identification information IF1, IF2 of the first and/or second party 11,12 (not illustrated), wherein a first step 31 of the processing comprises that the copied user data CUD is converted to a unified and standardized format like, e. g., a XML (Extensible Markup Language) format, wherein a second step 32 comprises the handling of the copied user data CUD according to the identification information IF1, IF2. For example, for reasons of data protection it is possible that only data stemming from users which have agreed to a certain privacy policy may be stored in the user data collector 30. The users related to the copied user data CUD can be identified in the second step 32 via the identification information IF1, IF2, e. g., via a phone number or an IMSI. In the case that the identified user has not agreed to store user data the copied user data CUD will be deleted in a third step 33' and not further be processed. However, in the case that the identified user has agreed to store user data the copied user data CUD will be stored as a data entry DE in the user data collector 30 in the alternative third step 33. The stored data entry DE can then, henceforth, be accessed by a third party 41 over the public IP network. According to the embodiment depicted in Figure 3, the data entry DE is further processed before being transmitted to the third party 41. Therefore, a fourth step 34 comprises the handling of the data entry DE stored in the user data collector 30 according to a predefined rule set. For example, the predefined rule set can be configured such that only data entries DE related to a certain time stamp and/or to a certain user and/or to a certain communication channel will further be processed according to a fifth step 35. The fifth step 35 comprises that the data entry DE is converted to a preferred format supported by the third party 41, wherein the converted data entry DE is finally transmitted to the third party 41 over the public IP network 4 (not illustrated).

One preferred application of the depicted embodiment of the present invention is that the third party 41 is a web server hosting an Internet forum, wherein a certain set of data entries DE stored in the user data collector 30 is selected according to a predefined rule set and transferred to the web server 41 using an appropriate transfer protocol, e. g., HTTP, wherein the transferred data entries DE are then processed by a web application of the web server 41 such that the data entries DE are being published in the Internet forum and can be accessed, discussed and annotated by other Internet users.

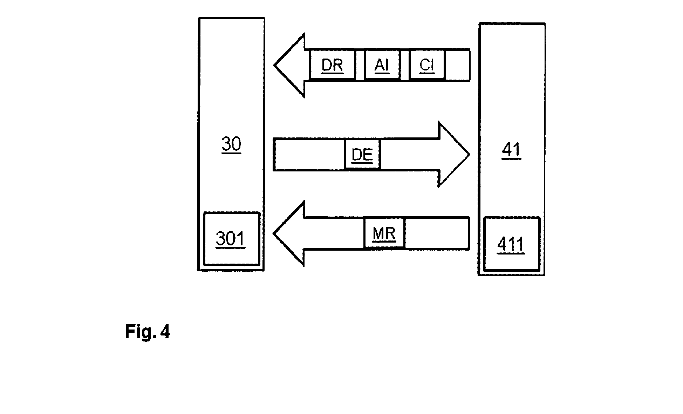

Figure 4 shows schematically a communication between the user data collector 30 and a third party 41 according to the present invention. For the sake of illustration, it is assumed in the following that the third party 41 corresponds to a personal computer running a web application 411, e. g., a web browser, wherein the personal computer 41 transmits a data request DR to the user data collector 30 using the web application 411. For example, the web application 411 can be used to transmit the data request DR using an appropriate transfer protocol, e. g, HTTP. According to the present invention, it is preferred that the data request DR comprises authentication information AI and control information CI. The control information CI comprises control parameters that determine which data entries DE are requested by the personal computer 41. For example, it is possible that based on the control information CI only data entries DE related to a certain time stamp and/or to a certain user and/or to a certain communication channel are requested. Furthermore, the control information CI can comprise control parameters that determine which data format should be used by the user data collector 30 for transmission. Based on the authentication information AI, e. g., an IP address and/or an user name, the user data collector 30 then decides whether the personal computer 41 is allowed to receive the requested data entries DE. If this is the case, the user data collector 30 transmits the data entries DE to the personal computer 41, wherein the transmitted data entries DE are then, e. g., displayed by the web application 411. According to the present invention, it is, furthermore, preferred that the web application 411 provides functionality to annotate or delete the data entries DE being displayed in the web application 411. For example, if a user of the personal computer 41 wants to delete a certain data entry DE, it is possible that a modification request MR is transmitted to the user data collector 30, wherein due to the modification request MR the user data collector 30 deletes the data entry DE stored in the user data collector 30. Similarly, if the user wants to annotate a certain data entry DE, it is possible that a modification request MR comprising annotation data is transmitted to the user data collector 30, wherein the user data collector 30 stores the annotation data and assigns the annotation data to the certain data entry DE. According to the present invention, it is, thereby, advantageously possible that data entries DE stored in the user data collector 30 can not only be accessed by a third party 41 over a public IP network 4, but can also be modified. Therefore, data entries DE stored in the user data collector 30 can be shared in a very convenient way with a large group of third parties.

## Claims

1. Method for providing mobile originated and/or mobile terminated user data (UD) to a public IP network (4), wherein the user data (UD) is transmitted between a first party (11) and a second party (12) over a mobile radio network (1), wherein the mobile radio network (1) comprises a mobile radio network instance (20), wherein the mobile radio network instance (20) is connected to a user data collector (30), wherein the user data collector (30) comprises a network interface to receive and to transfer data over the public IP network (4), wherein a first step comprises that the user data (UD) is transmitted from the first party (11) to the mobile radio network instance (20), wherein a second step comprises that a copy of the user data (CUD) is generated by the mobile radio network instance (20) and that the user data (UD) is transmitted from the mobile radio network instance (20) to the second party (12), wherein a third step comprises that the copied user data (CUD) is transferred from the mobile radio network instance (20) to the user data collector (30), wherein a fourth step comprises that a data entry (DE) is stored in the user data collector (30), wherein the content of the data entry (DE) is related to the copied user data (CUD), wherein in an initialization step at least one of the first party (11) and the second party (12) initializes the use of the user data collector (30) such that, for user data (UD) to be transmitted after the completion of the initialization step, the copy of the user data (CUD) is generated and transmitted from the mobile radio network instance (20) to the user data collector (30).

2. Method according to claim 1, wherein the third step comprises that the transfer of the copied user data (CUD) comprises the transfer of identification information (IF1) of the first party (11) and/or identification information (IF2) of the second party (12) to the user data collector (30).

3. Method according to claim 2, wherein the fourth step comprises that the handling of the copied user data (CUD) and/or of the stored data entry (DE) by the user data collector (30) depends on the identification information (IF1) of the first party (11) and/or the identification information (IF2) of the second party (12).

4. Method according to any of the preceding claims, wherein a fifth step comprises that a third party (41, 42, 43) transmits a data request (DR) to the user data collector (30) over the public IP network (4), wherein the data entry (DE) is transmitted by the user data collector (30) to the third party (41, 42, 43) over the public IP network (4) due to the data request (DR).

5. Method according to claim 4, wherein the data request (DR) comprises authentication information (AI) and/or control information (CI).

6. Method according to any of the claims 1 to 3, wherein a fifth step comprises that the data entry (DE) is transmitted by the user data collector (30) to a third party (41, 42, 43), wherein the transmission of the data entry (DE) is initiated by the user data collector (30).

7. Method according to any of the preceding claims, wherein a sixth step comprises that a third party (41, 42, 43) transmits a modification request (MR) to the user data collector (30), wherein a data entry (DE) stored in the user data collector (30) is modified according to the modification request (MR).

8. System for providing mobile originated and/or mobile terminated user data (UD) to a public IP network (4), wherein the system comprises a first party (11) and a second party (12), wherein the user data (UD) is transmitted between the first party (11) and the second party (12) over a mobile radio network (1), wherein the system comprises a mobile radio network instance (20) of the mobile radio network (1), wherein the mobile radio network instance (20) is connected to a user data collector (30), wherein the user data collector (30) comprises a network interface to receive and to transfer data over the public IP network (4), wherein the mobile radio network instance (20) comprises functionality to receive the user data (UD) from the first party (11) and to transmit the user data (UD) to the second party (12), wherein the mobile radio network instance (20) comprises functionality to transfer a copy of the user data (CUD) to the user data collector (30), wherein the user data collector (30) comprises functionality to store a data entry (DE) related to the copied user data (CUD), wherein the system is configured such that by means of an initialization step, at least one of the first party (11) and the second party (12) initializes the use of the user data collector (30) such that, for user data (UD) to be transmitted after the completion of the initialization step, the copy of the user data (CUD) is generated and transmitted from the mobile radio network instance (20) to the user data collector (30).

9. Mobile radio network instance (20) of a mobile radio network (1) for providing mobile originated and/or mobile terminated user data (UD) to a public IP network (4), wherein the user data (UD) is transmitted between a first party (11) and a second party (12) over the mobile radio network (1), wherein the mobile radio network instance (20) comprises functionality to receive the user data (UD) from the first party (11) and to transmit the user data (UD) to the second party (12), wherein the mobile radio network instance (20) comprises functionality to transfer a copy of the user data (CUD) to a user data collector (30), wherein the user data collector (30) comprises a network interface to receive and to transfer data over the public IP network (4), wherein the mobile radio network instance is configured such that by means of an initialization step, at least one of the first party (11) and the second party (12) initializes the use of the user data collector (30) such that, for user data (UD) to be transmitted after the completion of the initialization step, the copy of the user data (CUD) is generated and transmitted from the mobile radio network instance (20) to the user data collector (30).

10. User data collector (30) for providing mobile originated and/or mobile terminated user data (UD) to a public IP network (4), wherein the user data (UD) is transmitted between a first party (11) and a second party (12) over a mobile radio network (1), wherein the mobile radio network (1) comprises a mobile radio network instance (20), wherein the mobile radio network instance (20) is connected to a user data collector (CUD), wherein the user data collector (30) comprises reception means to receive a copy of the user data (CUD) from the mobile radio network instance (20), wherein the user data collector (30) comprises a storage to store a data entry (DE) related to the copied user data (CUD) in the user data collector (30), wherein the user data collector (30) comprises a network interface to receive and to transfer data over the public IP network (4), wherein the user data collector is configured such that by means of an initialization step, at least one of the first party (11) and the second party (12) initializes the use of the user data collector (30) such that, for user data (UD) to be transmitted after the completion of the initialization step, the copy of the user data (CUD) is generated and transmitted from the mobile radio network instance (20) to the user data collector (30).

11. Program comprising a computer readable program code that when executed on a processing means provides a method for providing mobile originated and/or mobile terminated user data (UD) to a public IP network (4) according to any of the claims 1 to 7.

12. Computer program product comprising a computer readable program code that when executed on a processing means provides a method for providing mobile originated and/or mobile terminated user data (UD) to a public IP network (4) according to any of the claims 1 to 7.
